# EUROPÄISCHE PATENTSCHRIFT

(11) **EP 2 795 769 B1**
(45) Veröffentlichungstag und Bekanntmachung des Hinweises auf die Patenterteilung: **06.02.2019**
(21) Anmeldenummer: 12805985.4
(22) Anmeldetag: 04.12.2012
(51) Int. Cl.: H02K 5/22

(54) **KUNSTSTOFF-VERDREHSICHERUNGSBAUTEIL FÜR EIN STROMKABEL AN EINEM STROMANSCHLUSSTEIL EINER ELEKTRISCHEN MASCHINE**
PLASTIC ANTI-TWIST COMPONENT FOR AN ELECTRICAL CABLE ON AN ELECTRICAL CONNECTION PART OF AN ELECTRIC MACHINE
ÉLÉMENT DE SÉCURITÉ ANTI-TORSION EN MATIÈRE PLASTIQUE POUR CÂBLE ÉLECTRIQUE AU NIVEAU D'UNE PIÈCE DE RACCORDEMENT ÉLECTRIQUE DANS UNE MACHINE ÉLECTRIQUE

(30) Priorität: 21.12.2011 DE 102011089441
(43) Veröffentlichungstag der Anmeldung: 29.10.2014
(73) Patentinhaber: SEG Automotive Germany GmbH, 70499 Stuttgart (DE)
(72) Erfinder: SEKERTZIS, Vassilios, 70439 Stuttgart (DE); SCHULZ, Martin, 70806 Kornwestheim (DE)
(74) Vertreter: Steinbauer, Florian
(86) Internationale Anmeldenummer: PCT/EP2012/074302
(87) Internationale Veröffentlichungsnummer: WO 2013/092194

(56) Entgegenhaltungen:
- EP-A1- 0 487 365
- DE-U1- 29 908 222

## Beschreibung

Die Erfindung bezieht sich auf ein Kunststoff-Verdrehsicherungsbauteil für ein Stromkabel an einem Stromanschlussteil einer elektrischen Maschine nach dem Oberbegriff des Anspruches 1.

### Stand der Technik

In der DE 10 2008 042 425 A1 wird ein Verdrehsicherungsteil aus Kunststoff beschrieben, das in einer elektrischen Maschine als Verdrehsicherung für ein Stromkabel dient, welches mit einer Öse verbunden ist, die auf einen Stromanschlussbolzen der elektrischen Maschine aufsteckbar ist. Das Verdrehsicherungsteil, das an einer stirnseitig auf die elektrische Maschine aufsetzbaren Schutzkappe gehalten ist, weist insgesamt drei jeweils um 90° zueinander versetzt angeordnete Aufnahmewege für das Stromkabel auf, die jeweils zu dem Stromanschlussbolzen führen und von seitlichen Führungswänden begrenzt sind, die die Aufgabe haben, ein versehentliches Verdrehen des Stromkabels um die Achse des Stromanschlussbolzens zu verhindern.

Aus der EP 0 487 365 A1 ist ein Verdrehsicherungsbauteil bekannt, welches für ein Stromkabel an einem Stromanschlussteil einer elektrischen Maschine geeignet ist. An diesem Bauteil sind Führungswände vorgesehen, die einen zwischenliegenden Aufnahmeweg zur Aufnahme und Drehrichtung des Stromkabels begrenzen. Demgegenüber sollen die Führungswände in einer speziellen Weise zueinander versetzt angeordnet werden.

Des Weiteren ist aus dem Dokument DE 299 08 222 ein Verdrehsicherungsbauteil, welches ein Kopfteil mit Schweißbuckeln und Erhöhung aufweist, welche dazu dienen, das Verdrehen eines Kabelschuhs zu beschränken.

### Offenbarung der Erfindung

Der Erfindung liegt die Aufgabe zugrunde, mit einfachen konstruktiven Maßnahmen ein Kunststoff-Verdrehsicherungsteil für ein Stromkabel, das an ein Stromanschlussteil einer elektrischen Maschine anzuschließen ist, so auszubilden, dass bei leichter Herstellbarkeit ein unerwünschtes Verdrehen des Stromkabels verhindert ist.

Diese Aufgabe wird erfindungsgemäß mit den Merkmalen des Anspruches 1 gelöst. Die Unteransprüche geben zweckmäßige Weiterbildungen an.

Das Kunststoff-Verdrehsicherungsbauteil wird in elektrischen Maschinen eingesetzt, beispielsweise in Elektromotoren oder in Generatoren, die in Fahrzeugen verwendet werden können, und dient dazu, ein unerwünschtes Verdrehen bzw. Verschwenken eines Stromkabels, das zur Stromversorgung an die elektrische Maschine angeschlossen ist, zu verhindern. Das Stromkabel wird an einem Stromanschlussteil der elektrischen Maschine fixiert, beispielsweise mittels einer Öse auf einen Stromanschlussbolzen der Maschine aufgesetzt. Insbesondere bei dieser Anschlussart besteht grundsätzlich die Gefahr, dass die Öse am Stromkabel um die Längsachse des Anschlussbolzens verschwenkt, was mit einer entsprechenden Drehbewegung des Stromkabels einhergeht. Um dies zu verhindern, sind an dem Verdrehsicherungsbauteil zumindest zwei seitliche Führungswände angeordnet, die einen zwischenliegenden Aufnahmeweg für das Stromkabel begrenzen, wobei der Aufnahmeweg im montierten Zustand des Verdrehsicherungsbauteils zu dem Stromanschlussteil an der elektrischen Maschine führt. Ein Verdrehen des Stromkabels, das entlang des Aufnahmewegs im Verdrehsicherungsteil verläuft, ist somit nur bis zum Kontakt mit den seitlichen Führungswänden möglich. Die Führungswände sind einteiliger Bestandteil des Verdrehsicherungsbauteils.

Das Verdrehsicherungsbauteil besteht aus Kunststoff und wird insbesondere im Kunststoff-Spritzgießverfahren hergestellt. Um beim Herstellungsprozess das Verdrehsicherungsbauteil mit den überstehenden Führungswänden entformen zu können, also aus der Form herauszulösen, sind die Führungswände bezogen auf die Längsrichtung des zwischenliegenden Aufnahmewegs versetzt zueinander angeordnet, wodurch orthogonal zur Längsrichtung des Aufnahmewegs zwei gegenüberliegende, gegenläufige Entformungspfade gebildet sind, entlang denen zum Entformen Schieber oder dergleichen bewegt werden können. Die Entformungspfade sind parallel versetzt zueinander und von gegenüberliegenden Seiten zugänglich. Jeder Entformungspfad erstreckt sich zweckmäßigerweise bis zu der Innenseite einer Führungswand auf der gegenüberliegenden Seite des Aufnahmewegs. Auf diese Weise ist trotz des spritzgießtechnisch verhältnismäßig komplizierten Aufbaus des Verdrehsicherungsteils ein problemloses Entformen möglich.

Gemäß einer zweckmäßigen Ausführung sind die auf unterschiedlichen, gegenüberliegenden Seiten des Aufnahmewegs angeordneten Führungswände bezogen auf die Längsrichtung des Aufnahmewegs in der Weise versetzt zueinander angeordnet, dass sich an die Stirnseite einer ersten Führungswand die Stirnseite der zweiten, gegenüberliegenden Führungswand anschließt. Dies ermöglicht einen verhältnismäßig breiten Entformungspfad, dessen Breite der Erstreckung der Führungswand in Längsrichtung des Aufnahmewegs entspricht. Gemäß weiterer zweckmäßiger Ausführung weisen die Führungswände in Längsrichtung des Aufnahmewegs eine Erstreckung auf, die zusammengenommen der Länge des Aufnahmewegs entspricht. Bei entsprechender gegenüberliegender Positionierung der Führungswände, die sich stirnseitig aneinander anschließen, können auf diese Weise Entformungspfade gebildet werden, deren Gesamtbreite der Länge des Aufnahmewegs entspricht.

Gemäß noch einer weiteren zweckmäßigen Ausführung weist das Verdrehsicherungsbauteil zwei diametral gegenüberliegende Aufnahmewege auf, die jeweils von Führungswänden begrenzt sind und bezogen auf die Position des Stromanschlussteils insbesondere spiegelsymmetrisch zueinander angeordnet sind. Es besteht dadurch die Möglichkeit, das Stromkabel von zwei verschiedenen, gegenüberliegenden Richtungen am Stromanschlussteil der elektrischen Maschine anzuschließen.

Gemäß noch einer weiteren zweckmäßigen Ausführung weist das Verdrehsicherungsbauteil zwei winklig zueinander stehende Aufnahmewege auf, die jeweils von Führungswänden begrenzt sind, wobei gegebenenfalls eine gemeinsame Führungswand, die winkelförmig ausgebildet sein kann, als Begrenzung für beide Aufnahmewege dienen kann. Insbesondere in Kombination mit zwei diametral zueinander gegenüberliegend angeordneten Aufnahmewegen bietet der hierzu winklig, insbesondere in einem 90° Winkel angeordnete Aufnahmeweg eine dritte Möglichkeit für das Verlegen des Stromkabels. Zusätzliche Führungswände sind hierfür nicht erforderlich; in der winkelförmigen Ausbildung begrenzen die Führungswände jeweils zwei Aufnahmewege.

Gemäß einer weiteren zweckmäßigen Ausführung ist das Verdrehsicherungsbauteil einteilig mit einer Schutzkappe ausgebildet, die stirnseitig auf ein Gehäuse der elektrischen Maschine aufsetzbar ist. Das Verdrehsicherungsbauteil bildet insbesondere eine Seitenwand der Schutzkappe, wobei die Seitenwand winklig zur Stirnseite der Schutzkappe liegt. Bei annähernd topfförmiger Ausbildung der Schutzkappe befindet sich das Verdrehsicherungsbauteil an einem Abschnitt der umlaufenden Seitenwand der Schutzkappe.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht ein Kunststoff-Verdrehsicherungsbauteil für ein Stromkabel, wobei das Verdrehsicherungsbauteil auf einen Stromanschlussbolzen einer elektrischen Maschine aufgesetzt ist,
- Fig. 2: das Verdrehsicherungsbauteil in einer weiteren perspektivischen Darstellung.

In den Figuren sind gleiche Bauteile mit gleichen Bezugszeichen versehen.

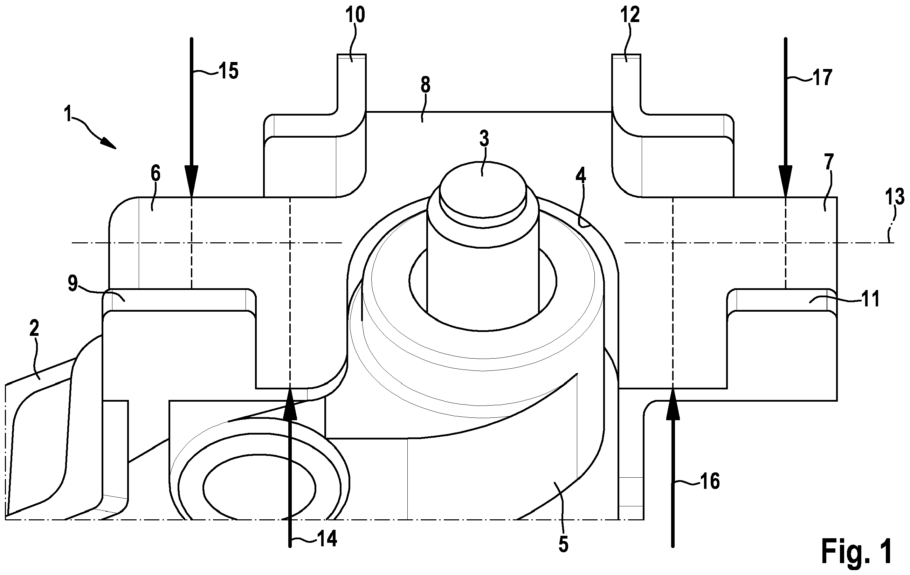

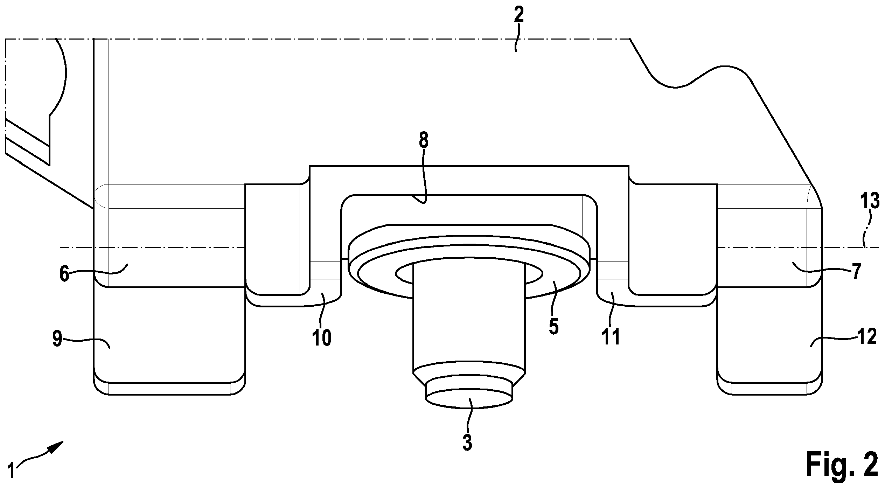

In den Fig. 1 und 2 ist ein Verdrehsicherungsbauteil 1 aus Kunststoff dargestellt, das einteilig mit einer Schutzkappe 2 ausgebildet ist, welche auf die Stirnseite des Gehäuses einer elektrischen Maschine aufsetzbar ist. Das Verdrehsicherungsbauteil 1 befindet sich an einer Seitenwand der Schutzkappe, wobei sich die Seitenwand winklig zur Stirnseite der Schutzkappe erstreckt. Das Verdrehsicherungsbauteil 1 dient zur Führung und Halterung eines Stromkabels zum Anschluss an ein bolzenförmiges Stromanschlussteil 3 der elektrischen Maschine. Das Stromkabel ist vorteilhafterweise elektrisch mit einer stirnseitigen Anschlussöse verbunden, welche axial auf das bolzenförmige Stromanschlussteil 3 aufgeschoben wird.

Das Verdrehsicherungsbauteil 1 ist mit einer halboffenen Ausnehmung 4 versehen, mit der das Verdrehsicherungsteil 1 auf einen gehäuseseitigen Aufnahmeabschnitt 5 der elektrischen Maschine aufgeschoben werden kann, wobei der Aufnahmeabschnitt 5 das bolzenförmige Stromanschlussteil 3 aufnimmt.

Das Verdrehsicherungsbauteil 1 weist insgesamt drei Aufnahmewege 6, 7, 8 zur Aufnahme und Halterung bzw. Abstützung des Stromkabels auf. Die Aufnahmewege 6, 7, 8 sind an der Oberfläche des Verdrehsicherungsbauteils 1 gebildet und jeweils von zwei seitlichen Führungswänden 9, 10 bzw. 10, 12 bzw. 11, 12 begrenzt. Jeweils zwei Aufnahmewege 6, 7 liegen einander - bezogen auf die Ausnehmung 4 bzw. im montierten Zustand auf das Stromanschlussteil 3 - diametral gegenüber und weisen eine gemeinsame Längsrichtung 13 auf. Der dritte Aufnahmeweg 8 erstreckt sich orthogonal zur Längsrichtung 13 der beiden ersten Aufnahmewege 6, 7 und reicht ebenfalls bis zum Stromanschlussteil 3. Die beiden einander diametral gegenüberliegenden Aufnahmewege 6, 7 sowie die zugehörigen Führungswände 9, 10 bzw. 11, 12 sind bezogen auf eine Mittelhalbierende durch das Stromanschlussteil 3 spiegelsymmetrisch zueinander ausgebildet.

Der erste Aufnahmeweg 6 ist von den beiden Führungswänden 9 und 10 seitlich begrenzt, wobei die erste Führungswand 9 geradlinig und die zweite Führungswand 10 winkelförmig ausgebildet ist und die zweite Führungswand 10 zugleich eine seitliche Begrenzung für den Aufnahmeweg 8 bildet. In entsprechender Weise ist die Führungswand 11 des diametral gegenüberliegenden Aufnahmewegs 7 geradlinig und die Führungswand 12 winkelförmig ausgebildet, wobei Letztere zugleich eine seitliche Begrenzung für den Aufnahmeweg 8 bildet.

Des Weiteren sind die beiden Führungswände 9, 10 des ersten Aufnahmewegs 6 bezogen auf die Längsrichtung 13 axial versetzt zueinander angeordnet, und zwar in der Weise, dass die geradlinig ausgebildete Führungswand 9 sich vom Beginn des Aufnahmewegs 6 ausgehend in Richtung auf die zentrale Ausnehmung 4 erstreckt und die zweite, schräg gegenüberliegende, winkelförmige Führungswand 10 sich axial an die der Ausnehmung 4 zugewandte Stirnseite der ersten Führungswand 9 anschließt. In entsprechender Weise sind auch die Führungswände 12 und 11 des diametral gegenüberliegenden Aufnahmewegs 7 ausgebildet. Hierdurch ergeben sich pro Aufnahmeweg 6, 7 zwei quergerichtete Entformungspfade gemäß den Pfeilen 14, 15 bzw. 16, 17. Entlang der Entformungspfade 14 bis 17, welche wie mit strichlierter Linie angedeutet orthogonal zur Längsrichtung 13 der diametral gegenüberliegenden Aufnahmewege 6 und 7 verlaufen, können während des Herstellungsprozesses des Verdrehsicherungsbauteils 1 zum Entformen Schieber geführt bzw. wieder zurückgezogen werden. Die Entformungspfade 14 bis 17 erstrecken sich jeweils ausgehend von der offenen Seite der diametral gegenüberliegenden Aufnahmewege 6 und 7 bis zur gegenüberliegenden Führungswand 9 bis 12. Da die Führungswände 9, 10 bzw. 11, 12 eines Aufnahmewegs 6 bzw. 7 sich in Längsrichtung 13 zusammengenommen jeweils über die gesamte axiale Länge des betreffenden Aufnahmeweges 6, 7 erstrecken, ist aufgrund der axial versetzten Anordnung der Führungswände die addierte Breite der zwei Entformungspfade 14, 15 bzw. 16, 17 pro Aufnahmeweg gleich lang wie dessen axiale Länge.

## Patentansprüche

1. Kunststoff-Verdrehsicherungsbauteil für ein Stromkabel an einem Stromanschlussteil (3) einer elektrischen Maschine, wobei am Verdrehsicherungsbauteil (1) Führungswände (9 - 12) angeordnet sind, die einen zwischenliegenden Aufnahmeweg (6 - 8) zur Aufnahme und Drehsicherung des Stromkabels begrenzen, wobei zwei Führungswände (9 - 12) in Längsrichtung des zwischenliegenden Aufnahmewegs (6 - 8) versetzt zueinander angeordnet sind und orthogonal zum Aufnahmeweg (6 - 8) zwei gegenläufige, versetzt angeordnete Entformungspfade (14 - 17) gebildet sind, die unmittelbar benachbart zu der jeweiligen Führungswand (9 - 12) liegen, **dadurch gekennzeichnet, dass** die auf unterschiedlichen Seiten des Aufnahmewegs (6, 7) angeordneten Führungswände (9 - 12) in Längsrichtung des Aufnahmewegs (6, 7) in der Weise versetzt zueinander angeordnet sind, dass sich an die Stirnseite einer ersten Führungswand (9, 11) die Stirnseite der zweiten, gegenüberliegenden Führungswand (10, 12) anschließt.

2. Verdrehsicherungsbauteil nach Anspruch 1, **dadurch gekennzeichnet, dass** mindestens zwei winklig zueinander stehende Aufnahmewege (6 - 8) gebildet sind, die jeweils von Führungswänden (9 - 12) begrenzt sind.

3. Verdrehsicherungsbauteil nach Anspruch 2, **dadurch gekennzeichnet, dass** die zwei winklig zueinander stehenden Aufnahmewege (6 - 8) an einer Seite von einer gemeinsamen Führungswand (10, 12) begrenzt sind.

4. Verdrehsicherungsbauteil nach Anspruch 3, **dadurch gekennzeichnet, dass** die gemeinsame Führungswand (10, 12) winkelförmig ausgebildet ist.

5. Verdrehsicherungsbauteil nach einem der Ansprüche 1 bis 4, **dadurch gekennzeichnet, dass** zwei diametral gegenüberliegende, in einer gemeinsamen Längsachse liegende Aufnahmewege (6, 7) mit begrenzenden Führungswänden (9 - 12) vorgesehen sind.

6. Verdrehsicherungsbauteil nach Anspruch 5, **dadurch gekennzeichnet, dass** die sich gegenüberliegenden Aufnahmewege (6, 7) und Führungswände (9 - 12) spiegelsymmetrisch zueinander angeordnet sind.

7. Verdrehsicherungsbauteil nach einem der Ansprüche 1 bis 6, **dadurch gekennzeichnet, dass** das Verdrehsicherungsbauteil (1) einteilig mit einer axial auf ein Gehäuse der elektrischen Maschine aufsetzbaren Schutzkappe (2) ausgebildet ist.

8. Verdrehsicherungsbauteil nach Anspruch 7, **dadurch gekennzeichnet, dass** das Verdrehsicherungsbauteil (1) an einer Seitenwand der Schutzkappe (2) angeordnet ist, wobei die Seitenwand winklig zur Schutzkappenstirnseite liegt.

9. Elektrische Maschine mit einem Verdrehsicherungsbauteil (1) nach einem der Ansprüche 1 bis 8.

## Claims

1. A plastic anti-twist component for an electric cable on a power connection component (3) of an electrical machine, wherein guide walls (9 - 12) are disposed at the anti-twist component (1), which bound an intermediate receiving path (6 - 8) for receiving and rotationally securing the electric cable, wherein two guide walls (9 - 12) are arranged at an offset from each other in the longitudinal direction of the intermediate receiving path (6 - 8) and two counter-rotating demolding paths (14 - 17) arranged at an offset are formed orthogonally to the receiving path (6 - 8), which are located directly adjacent to the respective guide wall (9 - 12), **characterized in that** the guide walls (9-12) arranged on different sides of the receiving path (6, 7) are arranged offset relative to one another in the longitudinal direction of the receiving path (6, 7) such that the end face of the second, opposite guide wall (10, 12) adjoins the end face of a first guide wall (9, 11).

2. The anti-twist component according to claim 1, **characterized in that** at least two receiving paths (6 - 8) angled to each other are formed, which are each bounded by guide walls (9 - 12).

3. The anti-twist component according to claim 2, **characterized in that** the two receiving paths (6 - 8) angled to each other are bounded on a side by a common guide wall (10, 12).

4. The anti-twist component according to claim 3, **characterized in that** the common guide wall (10, 12) is formed angularly.

5. The anti-twist component according to one of the claims 1 to 4, **characterized in that** two diametrically opposed receiving paths (6, 7) lying on a common longitudinal axis are provided with bounding guide walls (9 - 12).

6. The anti-twist component according to claim 5, **characterized in that** the opposite receiving paths (6, 7) and guide walls (9 - 12) are arranged mirror-symmetrically with respect to one another.

7. The anti-twist component according to one of claims 1 to 6, **characterized in that**, the anti-twist component (1) is integrally formed with a protective cap (2) axially fitted on a housing of the electric machine.

8. The anti-twist component according to claim 7, **characterized in that** the anti-twist component (1) is arranged on a side wall of the protective cap (2), wherein the side wall lying at an angle to the protective cap end face.

9. An electrical machine having an anti-twist component (1) according to any one of claims 1 to 8.

## Revendications

1. Composant anti-torsion en matière plastique pour un câble électrique sur une pièce de connexion électrique (3) d'une machine électrique, dans lequel des parois de guidage (9 à 12) sont agencées sur le composant anti-torsion (1), lesquelles parois de guidage délimitent une voie de réception intermédiaire (6 à 8) pour recevoir le câble électrique et empêcher sa torsion, dans lequel deux parois de guidage (9 à 12) sont agencées de manière décalée l'une par rapport à l'autre dans une direction longitudinale de la voie de réception intermédiaire (6 à 8) et deux trajets d'extraction (14 à 17) agencés de manière décalée et opposée sont formés orthogonalement à la voie de réception (6 à 8), lesquels trajets d'extraction étant directement adjacents à la paroi de guidage (9 à 12) respective,
**caractérisé en ce que**
les parois de guidage (9 à 12) agencées sur différents côtés de la voie de réception (6, 7) sont agencées de manière décalée dans la direction longitudinale de la voie de réception (6, 7) de telle manière que le côté avant de la seconde paroi de guidage opposée (10, 12) soit adjacent au côté avant d'une première paroi de guidage (9, 11).

2. Composant anti-torsion selon la revendication 1, **caractérisé en ce qu'**au moins deux voies de réception (6 à 8) formant un angle l'une par rapport à l'autre sont formées, lesquelles voies de réception étant respectivement limitées par des parois de guidage (9 à 12).

3. Composant anti-torsion selon la revendication 2, **caractérisé en ce que** les deux voies de réception (6 à 8) formant un angle l'une par rapport à l'autre sont limitées d'un côté par une paroi de guidage (10, 12) commune.

4. Composant anti-torsion selon la revendication 3, **caractérisé en ce que** la paroi de guidage commune (10, 12) est formée avec un angle.

5. Composant anti-torsion selon l'une des revendications 1 à 4, **caractérisé en ce que** deux voies de réception (6, 7) diamétralement opposées et situées sur un axe longitudinal commun sont prévues avec des parois de guidage et de délimitation (9 à 12).

6. Composant anti-torsion selon la revendication 5, **caractérisé en ce que** des voies de réception (6, 7) et des parois de guidage (9 à 12) opposées sont agencées de manière symétrique les unes par rapport aux autres.

7. Composant anti-torsion selon l'une des revendications 1 à 6, **caractérisé en ce que** le composant anti-torsion (1) est formé d'un seul tenant avec un couvercle de protection (2) pouvant être placé axialement sur un boîtier de la machine électrique.

8. Composant anti-torsion selon la revendication 7, **caractérisé en ce que** le composant anti-torsion (1) est agencé sur une paroi latérale du couvercle de protection (2), dans lequel la paroi latérale forme un angle par rapport au côté avant du couvercle de protection.

9. Machine électrique pourvue d'un composant anti-torsion (1) selon l'une des revendications 1 à 8.
